# EUROPEAN PATENT APPLICATION

(11) **EP 4 303 654 A1**
(43) Date of publication of application: **10.01.2024**
(21) Application number: 22189367.0
(22) Date of filing: 09.08.2022
(51) Int. Cl.: G03B 17/56, G02B 7/02, G03B 3/02

(54) **TELE-CONVERTER STRUCTURE WITH ADJUSTABLE BACK FOCAL LENGTH**

(30) Priority: 08.07.2022 CN 202210798558
(71) Applicant: Shenzhen Dongzhen Optical Technology Co., Ltd, Longgang District Shenzhen Guangdong (CN)
(72) Inventor: YU, Zewei, Shenzhen (CN); YAO, Songjian, Shenzhen (CN); ZHANG, Bin, Shenzhen (CN)
(74) Representative: Herrero & Asociados, S.L.

(57) **Abstract**

Disclosed is a tele-converter structure with an adjustable back focal length. A lens cylinder is provided with guiding columns protruding radially at an outer wall thereof, and a straight drum is provided with guiding holes corresponding to the guiding columns. An inner rotating ring is provided with an annular body sleeved outside a cylinder body, and the annular body is provided with positioning holes corresponding to the guiding columns. A camera body adapter is fixedly connected at a rear end of the straight drum, and a lens adapter is fixedly connected at a front end of the straight drum. A focusing ring is fitted between the camera body adapter and the lens adapter, and the inner rotating ring is driven to move axially when the focusing ring is rotated.

## Description

### FIELD OF THE INVENTION

The utility patent relates to the technical field of lens, in particular, to a tele-converter structure with an adjustable back focal length.

### BACKGROUND OF THE INVENTION

Tele-converter is an additional lens on the camera, which, when used in conjunction with the main lens of the camera, magnifies the original object to transmit the full frame. When the tele-converter is applied to different cameras and main lenses, due to the gap among the tele-converter, the camera and the main lens, it will cause the problem of inaccurate back focal length of the main lens. Therefore, adjustments for the back focal length of the main lens are required to achieve the desired sharpness.

The applicant found in practice that most of the tele-converter in the prior art are designed in fixed structures. When the tele-converter is used with a camera and the main lens, additional tools are required to adjust the back focal length of the main lens each time by unscrewing the screws on the lens mount first, then removing the mount to replace the gasket and then putting the mount on to re-screw the screws.

Obviously, for the operation mode in the prior art, it is cumbersome, the screw is easily damaged to cause damage to the lens, and there is no guarantee that a replacement can achieve the desired effect with certain experience and judgment; the detachment is required for many times, and the steps are repeated and troublesome, which brings great trouble to the user.

### Brief Description of the utility patent

The utility patent aims at providing a tele-converter structure with an adjustable back focal length for the shortcomings of the prior art, wherein a convenient back focal length adjustment structure is set in the tele-converter, so as to meet the requirements in back focal adjustment of different main lenses by adjusting the back focal length of the tele-converter.

To achieve the above objective, the utility patent adopts the following technical solutions:
A tele-converter structure with an adjustable back focal length includes:
a lens cylinder, provided with a front lens and a rear lens at a front end and a rear end respectively, with an outer wall provided with guiding columns protruding radially along the lens cylinder;
a straight drum, provided with a cylinder body that is coaxially sleeved outside the lens cylinder to form an interference fit, wherein a front end of the drum body is provided a convex ring that is coaxially arranged at an outer wall thereof, the drum body is further provided with guiding holes corresponding to the guiding columns, and a length direction of the guiding hole is parallel to an axial direction of the straight drum; the guiding columns penetrate through the corresponding guiding holes, and the guiding columns are fitted movably along the length direction of the guiding hole in the corresponding guiding holes;
an inner rotating ring, provided with an annular body that is coaxially sleeved outside the drum body to form a rotation fit, wherein an outer annular surface of the annular body is provided with a convex ring that is coaxially arranged, the annular body is further provided with positioning holes corresponding to the guiding columns, and ends of the guide columns are just inserted into the corresponding positioning holes;
a camera body adapter, coaxially fixedly connected at a rear end of the straight drum;
a lens adapter, coaxially fixedly connected at a front end of the straight drum;
a focusing ring, coaxially arranged outside the convex ring to form the rotation fit and just fitted between the camera body adapter and the lens adapter to obtain an axial limit, wherein an outer annular surface of the focusing ring is provided with an annular boss coaxially arranged, and an inner wall of the focusing ring is in threaded fit with an outer round surface of the convex ring, so that the inner rotating ring is driven to move axially by way of spirally rotating when the focusing ring is rotated, and hence the lens cylinder is also moved axially in synchronization with the focusing ring through the guide columns;
a focus lock ring, coaxially arranged outside the lens adapter to form the threaded fit, wherein a rear end surface of the focus lock ring forms a damping surface opposite to a front end surface of the annular boss, and the focus lock ring will be tightly fitted to the front end surface of the annular boss through the damping surface when being rotated to move back axially, thereby locking the focusing ring.

In the above technical solutions, the camera body adapter and the lens adapter belong to the existing mount structure in the prior art, and may be a PL mount/an EF mount/an E mount/an L mount/a RF mount/an X mount respectively, so as to be suitable for cameras and main lenses with corresponding mount structures with the advantage of convenient disassembly and assembly. In actual use, first the tele-converter structure with an adjustable back focal length in the above technical solutions is assembled to the lens of the camera itself through the camera body adapter, and then the selected main lens is assembled through the lens adapter, so that the tele-converter may be quickly applied to the camera and the main lens without additional tools.

In the above technical solutions, since the inner rotating ring is driven to move axially by way of spirally transmitting when the focusing ring is rotated, the lens cylinder is also moved axially in synchronization with the focusing ring through the guide columns. Therefore, in actual use, the lens cylinder may be easily fine-tuned axially through the focusing ring, so that the back focal length of the main lens may be quickly calibrated, and there is no need to repeatedly disassemble and assemble for debugging.

Compared with the prior art, the utility patent has the following beneficial effects: no additional auxiliary tools are required for installation, and the back focal length may be adjusted directly without disassembly after installation, which improves the efficiency and significantly enhances the convenience of operation.

Hereinafter, the utility patent will be further described with reference to the accompanying drawings and specific embodiments.

### Brief Description of the Drawings

Fig. 1 is a structure diagram of the utility patent.
Fig. 2 is a cross-sectional diagram of the utility patent.
Fig. 3 is an exploded structure diagram of the utility patent.
Fig. 4 is a diagram showing the use state of the utility patent.

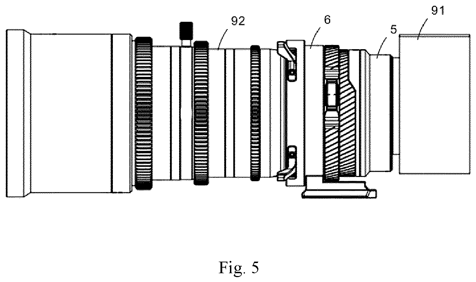

Fig. 5 is a structure diagram of a lens cylinder in the utility patent.

### Detailed Description of the Invention

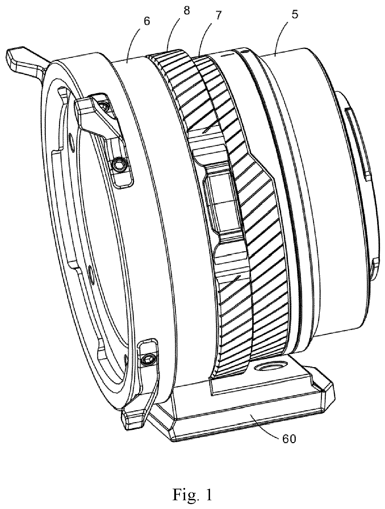

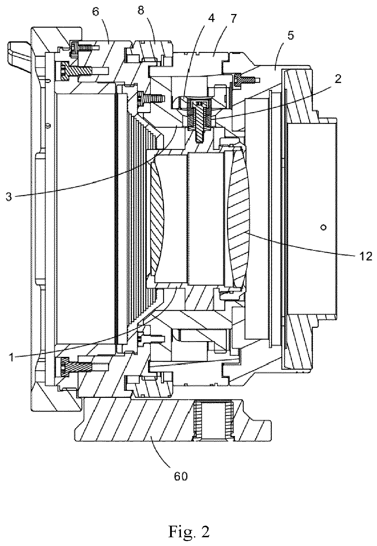

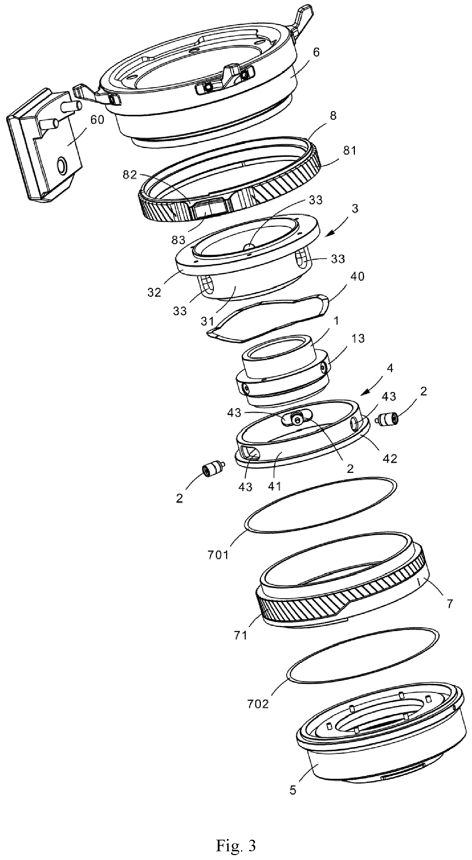

As shown in Figs. 1 to 3, a tele-converter structure with an adjustable back focal length includes:
a lens cylinder 1, which is provided with a front lens 11 and a rear lens 12 at a front end and a rear end respectively, with an outer wall provided with guiding columns 2 protruding radially along the lens cylinder 1;
a straight drum 3, which is provided with a cylinder body 31 that is coaxially sleeved outside the lens cylinder 1 to form an interference fit, wherein a front end of the drum body 31 is provided a convex ring 32 that is coaxially arranged at an outer wall thereof, the drum body 31 is further provided with guiding holes 33 corresponding to the guiding columns 2, and a length direction of the guiding hole 33 is parallel to an axial direction of the straight drum 3; the guiding columns 2 penetrate through the corresponding guiding holes 33, and the guiding columns 2 are fitted movably along the length direction of the guiding hole 33 in the corresponding guiding holes 33;
an inner rotating ring 4, which is provided with an annular body 41 that is coaxially sleeved outside the drum body 31 to form a rotation fit, wherein an outer annular surface of the annular body 41 is provided with a convex ring 42 that is coaxially arranged, the annular body 41 is further provided with positioning holes 43 corresponding to the guiding columns 2, and ends of the guide columns 2 are just inserted into the corresponding positioning holes 43;
a camera body adapter 5, which is coaxially fixedly connected at a rear end of the straight drum 3;
a lens adapter 6, which is coaxially fixedly connected at a front end of the straight drum;
a focusing ring 7, which is coaxially arranged outside the convex ring 32 to form the rotation fit and just fitted between the camera body adapter 5 and the lens adapter 6 to obtain an axial limit, wherein an outer annular surface of the focusing ring 7 is provided with an annular boss 71 coaxially arranged, and an inner wall of the focusing ring 7 is in threaded fit with an outer round surface of the convex ring 42, so that the inner rotating ring 4 is driven to move axially by way of spirally rotating when the focusing ring 7 is rotated, and hence the lens cylinder 1 is also moved axially in synchronization with the focusing ring 7 through the guide columns 2;
a focus lock ring 8, which is coaxially arranged outside the lens adapter 6 to form the threaded fit, wherein a rear end surface of the focus lock ring 8 forms a damping surface 81 opposite to a front end surface of the annular boss 71, and the focus lock ring will be tightly fitted to the front end surface of the annular boss 71 through the damping surface 81 when the focus lock ring 8 rotated to move back axially, thereby locking the focusing ring 7.

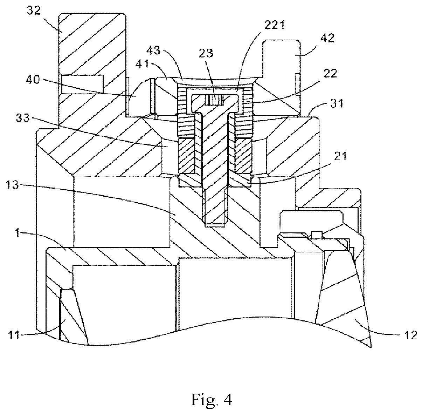

In the above embodiment, the camera body adapter 5 and the lens adapter 6 belong to the existing mount structure in the prior art, and may be a PL mount/an EF mount/an E mount/an L mount/a RF mount/an X mount respectively, so as to be suitable for cameras and main lenses with corresponding mount structures with the advantage of convenient disassembly and assembly. As shown in Fig. 4, in actual use, first the tele-converter structure with an adjustable back focal length in the above technical solutions is assembled to the lens of a camera 91 itself through the camera body adapter 5, and then a selected main lens 92 is assembled through the lens adapter 6, so that the tele-converter may be quickly applied to the camera and the main lens without additional tools.

In the above embodiment, since the inner rotating ring 4 is driven to move axially by way of spirally transmitting when the focusing ring 7 is rotated, the lens cylinder 1 is also moved axially in synchronization with the focusing ring 7 through the guide columns 2. Therefore, in actual use, the lens cylinder 1 may be easily fine-tuned axially through the focusing ring 7, so that the back focal length of the main lens may be quickly calibrated, and there is no need to repeatedly disassemble and assemble for debugging.

In a preferred embodiment, the tele-converter structure is provided with at least three guide columns 2 symmetrically distributed at equal angular distances around a central axis of the lens cylinder 1, so that the lens cylinder 1 has better axial stability during axial movement.

In a preferred embodiment, the guiding column 2 includes a screw barrel 21, an outer sheath 22 coaxially sleeved outside the screw barrel 21, and a socket set screw 23 coaxially inserted into the screw barrel 21; an upper end of the outer sheath 22 forms a counterbore 221 fitted with the socket set screw 23, and the socket set screw 23 penetrates down through the screw barrel 21 via the counterbore 221 to be screwed to the lens cylinder 1. With this arrangement, the guiding column 2 may be installed from the outside to the inside through the positioning hole 43 and the guiding hole 33 in sequence, which reduces the difficulty of assembly.

In a preferred embodiment, an outer wall of the lens cylinder 1 is provided with a supporting ring 13 that is coaxially arranged, and the guiding column 2 is connected to an outer annular surface of the supporting ring 13, so that the supporting ring 13 bears the shear force transmitted by the guide column 2, which facilitates the protection of the structure of the lens cylinder 1.

In a preferred embodiment, a first washer 701 to reduce sliding friction is provided between a front end surface of the focusing ring 7 and the lens adapter 6, and a second washer 702 to reduce sliding friction is provided between a rear end surface of the focusing ring 7 and the camera body adapter 5 and the length adapter 6.

In a preferred embodiment, an annular elastic sheet 40 coaxial with the drum body 31 is provided between a front end surface of the annular body 41 and a rear end surface of the convex ring 32, and an elastic tight fit is maintained between the front end surface of the annular body 41 and the rear end surface of the convex ring 32 through the annular elastic sheet 40, so that the axial matching gap between the inner rotating ring 4 and the lens adapter 6 is eliminated by an elastic force of the annular elastic sheet 40 to ensure that the inner rotating ring 4 is driven to move axially by way of spirally transmitting when the focusing ring 7 is rotated and to avoid the inner rotating ring 4 from idling synchronously with the focusing ring 7.

In a preferred embodiment, the outer annular surface of the focusing ring 7 is provided with a first gear ring 72 that is coaxially arranged, and an outer round surface of the first gear ring 72 is provided with a concave/convex texture for increasing friction to prevent slippage when the user rotates the focusing ring 7.

In a preferred embodiment, an outer annular surface of the focus lock ring 8 is provided with a second gear ring 82 that is coaxially arranged, and an outer round surface of the second gear ring 82 is provided with the concave/convex texture for increasing friction to prevent slippage when the user rotates the focus lock ring 8.

In a preferred embodiment, the outer annular surface of the focus lock ring 8 is provided with a plurality of bosses 82 symmetrically distributed at equal angular distances around the central axis, and a top portion of the boss 82 is provided with a buckle position 84 formed due to the depression, so that the user operates the focus lock ring 8 by snapping into the buckle position 84 with a finger, thereby adjusting the focus lock ring 8 more conveniently and reliably.

In a preferred embodiment, a lower edge of the lens adapter 6 is further provided with a base 60 for being adapted to a tripod.

For those skilled in the art, the protection scope of the invention is not limited to the details of the above-mentioned exemplary embodiments. Without departing from the spirit or essential characteristics of the invention, all modified embodiments within the equivalent meaning and protection scope made by those skilled in the art based on the requirements of the invention shall be included in the invention.

## Claims

1. A tele-converter structure with an adjustable back focal length, comprising:
a lens cylinder, provided with a front lens and a rear lens at a front end and a rear end respectively, with an outer wall provided with guiding columns protruding radially along the lens cylinder;
a straight drum, provided with a cylinder body that is coaxially sleeved outside the lens cylinder to form an interference fit, wherein a front end of the drum body is provided a convex ring that is coaxially arranged at an outer wall thereof, the drum body is further provided with guiding holes corresponding to the guiding columns, and a length direction of the guiding hole is parallel to an axial direction of the straight drum; the guiding columns penetrate through the corresponding guiding holes, and the guiding columns are fitted movably along the length direction of the guiding hole in the corresponding guiding holes;
an inner rotating ring, provided with an annular body that is coaxially sleeved outside the drum body to form a rotation fit, wherein an outer annular surface of the annular body is provided with a convex ring that is coaxially arranged, the annular body is further provided with positioning holes corresponding to the guiding columns, and ends of the guide columns are just inserted into the corresponding positioning holes;
a camera body adapter, coaxially fixedly connected at a rear end of the straight drum;
a lens adapter, coaxially fixedly connected at a front end of the straight drum;
a focusing ring, coaxially arranged outside the convex ring to form the rotation fit and just fitted between the camera body adapter and the lens adapter to obtain an axial limit, wherein an outer annular surface of the focusing ring is provided with an annular boss coaxially arranged, and an inner wall of the focusing ring is in threaded fit with an outer round surface of the convex ring, so that the inner rotating ring is driven to move axially by way of spirally rotating when the focusing ring is rotated, and hence the lens cylinder is also moved axially in synchronization with the focusing ring through the guide columns;
a focus lock ring, coaxially arranged outside the lens adapter to form the threaded fit, wherein a rear end surface of the focus lock ring forms a damping surface opposite to a front end surface of the annular boss, and the focus lock ring will be tightly fitted to the front end surface of the annular boss through the damping surface when being rotated to move back axially, thereby locking the focusing ring.

2. The tele-converter structure with an adjustable back focal length according to claim 1, provided with at least three guide columns symmetrically distributed at equal angular distances around a central axis of the lens cylinder.

3. The tele-converter structure with an adjustable back focal length according to claim 1, wherein the guiding column comprises a screw barrel, an outer sheath coaxially sleeved outside the screw barrel, and a socket set screw coaxially inserted into the screw barrel; an upper end of the outer sheath forms a counterbore fitted with the socket set screw, and the socket set screw penetrates down through the screw barrel via the counterbore to be screwed to the lens cylinder.

4. The tele-converter structure with an adjustable back focal length according to claim 1, wherein an outer wall of the lens cylinder is provided with a supporting ring that is coaxially arranged, and the guiding column is connected to an outer annular surface of the supporting ring.

5. The tele-converter structure with an adjustable back focal length according to claim 1, wherein a first washer to reduce sliding friction is provided between a front end surface of the focusing ring and the camera body adapter and the lens adapter, and a second washer to reduce sliding friction is provided between a rear end surface of the focusing ring and the camera body adapter.

6. The tele-converter structure with an adjustable back focal length according to claim 1, wherein an annular elastic sheet coaxial with the drum body is provided between a front end surface of the annular body and a rear end surface of the convex ring, and an elastic tight fit is maintained between the front end surface of the annular body and the rear end surface of the convex ring through the annular elastic sheet.

7. The tele-converter structure with an adjustable back focal length according to claim 1, wherein the outer annular surface of the focusing ring is provided with a first gear ring that is coaxially arranged, and an outer round surface of the first gear ring is provided with a concave/convex texture for increasing friction.

8. The tele-converter structure with an adjustable back focal length according to claim 1, wherein an outer annular surface of the focus lock ring is provided with a second gear ring that is coaxially arranged, and an outer round surface of the second gear ring is provided with the concave/convex texture for increasing friction.

9. The tele-converter structure with an adjustable back focal length according to claim 1, wherein the outer annular surface of the focus lock ring is provided with a plurality of bosses symmetrically distributed at equal angular distances around the central axis, and a top portion of the boss is provided with a buckle position formed due to the depression.

10. The tele-converter structure with an adjustable back focal length according to claim 1, wherein a lower edge of the lens adapter is further provided with a base.
